# EUROPEAN PATENT SPECIFICATION

(11) **EP 1 157 894 B1**
(45) Date of publication and mention of the grant of the patent: **09.07.2003**
(21) Application number: 01304450.8
(22) Date of filing: 21.05.2001
(51) Int. Cl.: B60R 16/02

(54) **Bellows cable grommet**
Faltenbalg-Kabeldurchführung
Traversée de câble en forme de soufflet

(30) Priority: 22.05.2000 JP 2000149166
(43) Date of publication of application: 28.11.2001
(73) Proprietor: Yazaki Corporation, Minato-ku, Tokyo (JP)
(72) Inventor: Yasuda, Tsukasa, Susono-shi, Shizuoka (JP); Hashimoto, Katsuya, Toyohira-ku, Sapporo-shi, Hokkaido (JP)
(74) Representative: Haley, Stephen

(56) References cited:
- EP-A- 0 888 930
- US-A- 5 716 044
- PATENT ABSTRACTS OF JAPAN vol. 1996, no. 12, 26 December 1996 (1996-12-26) -& JP 08 212858 A (YAZAKI CORP;ARACO CORP), 20 August 1996 (1996-08-20)
- PATENT ABSTRACTS OF JAPAN vol. 1998, no. 12, 31 October 1998 (1998-10-31) -& JP 10 191536 A (SUMITOMO WIRING SYST LTD), 21 July 1998 (1998-07-21)
- PATENT ABSTRACTS OF JAPAN vol. 1997, no. 07, 31 July 1997 (1997-07-31) -& JP 09 076837 A (HARNESS SOGO GIJUTSU KENKYUSHO:KK;SUMITOMO WIRING SYST LTD; SUMITOMO E), 25 March 1997 (1997-03-25)
- PATENT ABSTRACTS OF JAPAN vol. 1995, no. 02, 31 March 1995 (1995-03-31) -& JP 06 309978 A (KANSEI CORP), 4 November 1994 (1994-11-04)
- PATENT ABSTRACTS OF JAPAN vol. 1995, no. 08, 29 September 1995 (1995-09-29) -& JP 07 115286 A (YAZAKI CORP;OTHERS: 01), 2 May 1995 (1995-05-02)

## Description

The present invention relates to a grommet which is attached in such a manner as to straddle a vehicle body-side panel and a door-side panel of an automobile, for example, and which is attached to an end portion of a tube portion for protecting a wire harness through the wire harness. More particularly, the present invention concerns a grommet through which the wire harness can be inserted without strains and in which the wire harness does not undergo friction at a bent portion of the grommet even if relative movement occurs between the panels.

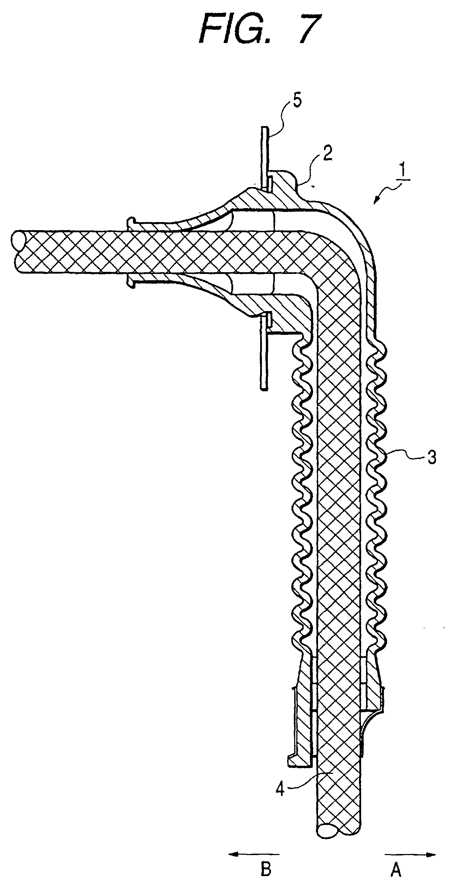

A related bellows grommet has an arrangement such as the one shown in Fig. 7. Namely, in a bellows grommet 1, a fitting portion 2 and a bellows tube 3 are integrally formed, and the fitting portion 2 is bent in a direction substantially perpendicular to the bellows tube 3. A wire harness 4 is accommodated in the bellows tube 3. This bellows grommet 1 is attached in such a manner as to straddle a vehicle body-side panel 5 and a door-side panel of an automobile, for example, and the bellows tube 3 is adapted to freely bend in the directions indicated by arrows A and B as the door-side panel moves.

However, with such a related bellows grommet, when the bellows tube 3 bends in the directions indicated by the arrows A and B as the door-side panel moves, the wire harness 4 accommodated in the bellows tube 3 moves inside the bellows tube 3 due to the expansion or contraction of the bellows tube 3. Hence, there is a problem in that as the wire harness 4 moves in and out of the bellows tube 3, the wire harness 4 strikes the inner wall surface of a bent portion 3 of the fitting portion 2 and rubs against it, with the result that the wire harness 4 becomes worn.

In addition, since the fitting portion 2 is bent in a direction substantially perpendicular to the bellows tube 3, an exclusive-use jig or the like is required to pass the wire harness 4 through the bellows tube 3, and therefore there is a problem in that the operating efficiency is poor.

An object of the invention is to make it possible to easily accommodate the wire harness without using a special exclusive-use jig, prevent the wire harness from becoming damaged due to rubbing at the bent portion of the guide tube portion even if the bellows tube portion expands or contracts, improve the assembling efficiency, and restrict the wire harness reliably.

JP-A-08212858 discloses a bellows grommet for installation into a panel. US-A-5716044 discloses a bellows grommet with a bent guide portion according to the preamble of claim 1.

To attain the above object there is provided a bellows grommet according to claim 1.

By adopting the above-described arrangement it is possible to easily accommodate the wire harness without using a special exclusive-use jig, prevent the wire harness from becoming damaged due to rubbing at the bent portion of the guide tube portion even if the bellows tube portion expands or contracts, improve the assembling efficiency, and restrict the wire harness reliably.

By adopting the above-described arrangement it is possible to easily accommodate the wire harness without using a special exclusive-use jig, and prevent the wire harness from becoming damaged due to rubbing at the bent portion of the guide tube even if the bellows tube portion expands or contracts. Furthermore, since the slit is opened and closed to accommodate the wire harness in the guide tube portion, the assembling efficiency improves, and the wire harness can be reliably restricted by the guide tube portion.

In addition, in the case where the wire harness accommodated in the guide tube portion is fixed on the guide tube portion side, and the finished wire diameter of the wire harness is small, the wire harness can be easily fixed by superposing slit portions and winding the tape around the guide tube portion by making use of the slit formed from the opening to the distal end. Furthermore, in the case where the finished wire diameter of the wire harness is large, the wire harness can be easily fixed by allowing the wire harness to be held by the guide tube portion in a state in which the gap between the two sides of the slit is widened, and by winding the tape around the guide tube portion and the wire harness. Accordingly, if the finished wire diameters of the wire harness are different, it is possible to cope with wire diameters up to a certain extent, thereby expanding the variation.

The opening may be formed at a position so as to prevent the wire harness from abutting against the guide tube portion or one of the fitting portion when the wire harness is inserted through the bellows tube portion.

By adopting the above―described arrangement, it is possible to prevent the wire harness from becoming damaged due to rubbing at the bent portion of the guide tube portion even if the bellows tube portion expands or contracts.

A fixing piece for fixing the wire harness may be formed in the other fitting portion.

The guide tube portion may be extended in a direction substantially perpendicular to which the bellows tube portion is extended.

In the drawings;
Fig. 1 is an overall schematic perspective view illustrating a bellows grommet in accordance with the invention;
Fig. 2 is a diagram illustrating a state of use of the bellows grommet shown in Fig. 1;
Fig. 3 is a diagram illustrating a state in which a wire harness is accommodated in a bellows tube portion of the bellows grommet shown in Fig. 2
Fig. 4 is a diagram illustrating a state in which a slit in a guide tube portion of the bellows grommet shown in Fig. 2 is opened;
Fig. 5 is a diagram illustrating a state in which the wire harness shown in Fig. 3 is bent in a direction in which the guide tube portion is formed;
Fig. 6 is a diagram. illustrating a state in which the wire harness shown in Fig. 5 is further bent and is accommodated in the guide tube portion; and
Fig. 7 is a cross―sectional view illustrating a state in which a wire harness is accommodated in a conventional bellows grommet.

Hereafter, a description will be given of an embodiment of the bellows grommet in accordance with the invention.

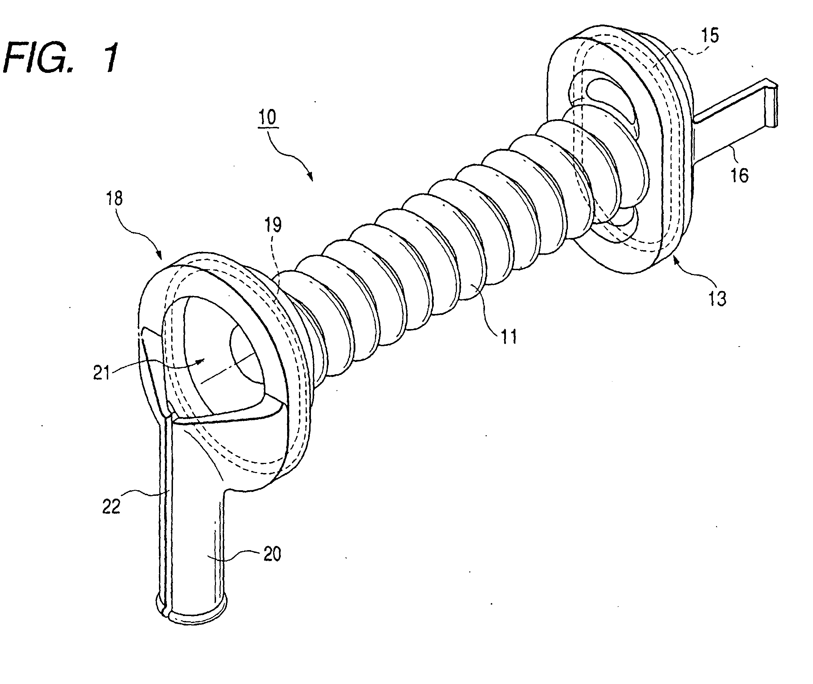

Figs. 1 to 6 show an embodiment of the bellows grommet in accordance with the invention.

In the drawings, a bellows grommet 10 has a bellows tube portion 11 which expands and contracts. A fitting portion 13 fitted to, for example, a door-side panel 12 of an unillustrated automobile is provided integrally with the bellows tube portion 11 at one end of the bellows tube portion 11. The bellows tube portion 11 is arranged to be stretchable, and is formed of a flexible material (e.g., rubber, a synthetic resin material, or the like), and a wire harness 14 is accommodated in the bellows tube portion 11.

The fitting portion 13 is formed in an elliptical shape and is formed integrally with the bellows tube portion 11. A groove portion 15 for fitting to the panel is formed in the fitting portion 13. Namely, the fitting of the fitting portion 13 to the panel 12 is effected by fitting the groove portion 15 to the panel 12. A fixing piece 16 which projects in the form of a strip to fix the wire harness 14 is provided on the fitting portion 13 on its side away from the side where the bellows tube portion 11 is formed. The fixing of the wire harness 14 to the fixing piece 16 is effected by placing the wire harness 14 along the fixing piece 16 and winding pressure sensitive adhesive tape around them. Consequently, the wire harness 14 is fixed to the fitting portion 13 of one end portion of the bellows tube portion 11, and when the bellows tube portion 11 is bent, the wire harness 14 on the other end portion side of the bellows tube portion 11 moves i.e. moves in and out.

A fitting portion 18 fitted to, for example, a vehicle body-side panel 17 of the unillustrated automobile is formed integrally with the bellows tube portion 11 at the other end of the bellows tube portion 11. Further, a groove portion 19 for fitting to the panel 17 is formed in the fitting portion 18. Namely, the fitting of the fitting portion 18 to the panel 17 is effected by fitting the groove portion 19 to the panel 17. A guide tube portion 20 for accommodating and guiding the wire harness 14 passed from the fitting portion 13 side is provided on the fitting portion 18 on its side away from the side where the bellows tube portion 11 is formed. This guide tube portion 20 is formed in such a manner as to be bent in an L-shape so as to extend along the surface of the panel 17 where the fitting portion 18 is fitted. In addition, as for this guide tube portion 20, an opening 21 which is open to the outside is formed in the bent portion which is bent in the L-shape. This opening 21 is provided to allow the wire harness 14 passed from the fitting portion 13 side to be passed in an unbent state, and has such an area of the opening that does not damage the wire harness 14 by rubbing the outer periphery of the wire harness 14 at the edge when the wire harness 14 passed from the fitting portion 13 side is passed straightly through the opening 21.

Furthermore, this guide tube portion 20 is provided with a slit 22 extending longitudinally to its tip. This slit 22 is provided to open the guide tube portion 20 when the wire harness 14 passed from the fitting portion 13 side is passed straightly through the opening 21, is bent, and is accommodated in the guide tube portion 20.

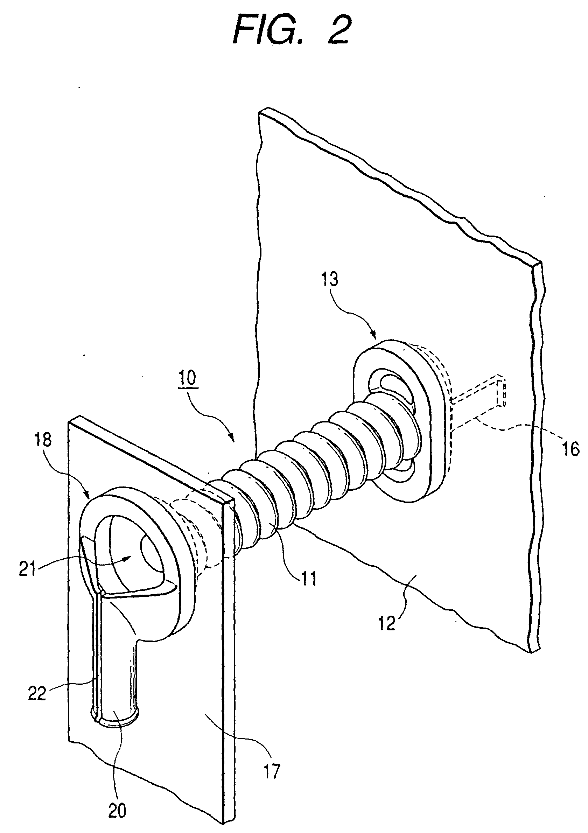

As shown in Fig. 2, the bellows grommet 10 thus arranged is attached in such a manner as to straddle two panels 12 and 17 (e.g., the vehicle body-side panel and the door-side panel of an automobile), and the bellows tube portion 11 is adapted to freely expand, contract, or bend as one panel 12 moves.

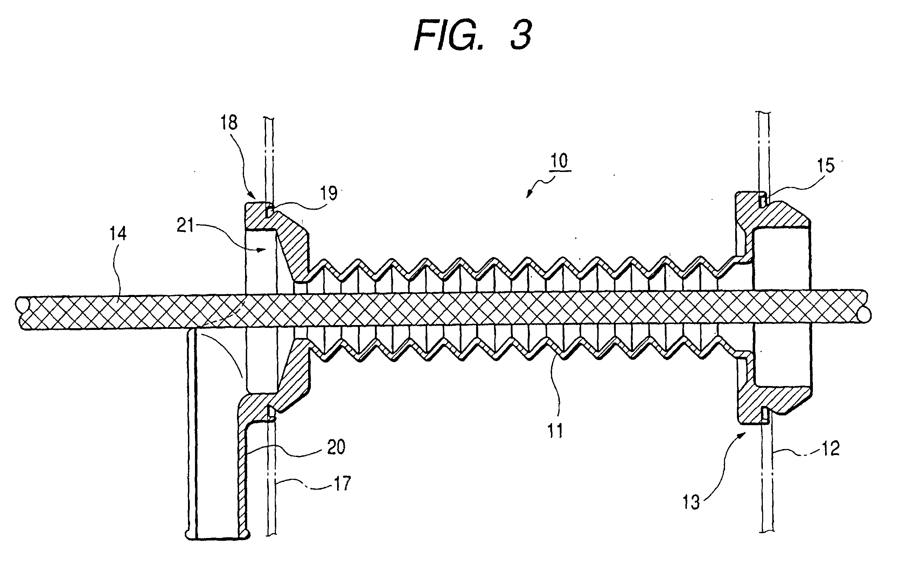

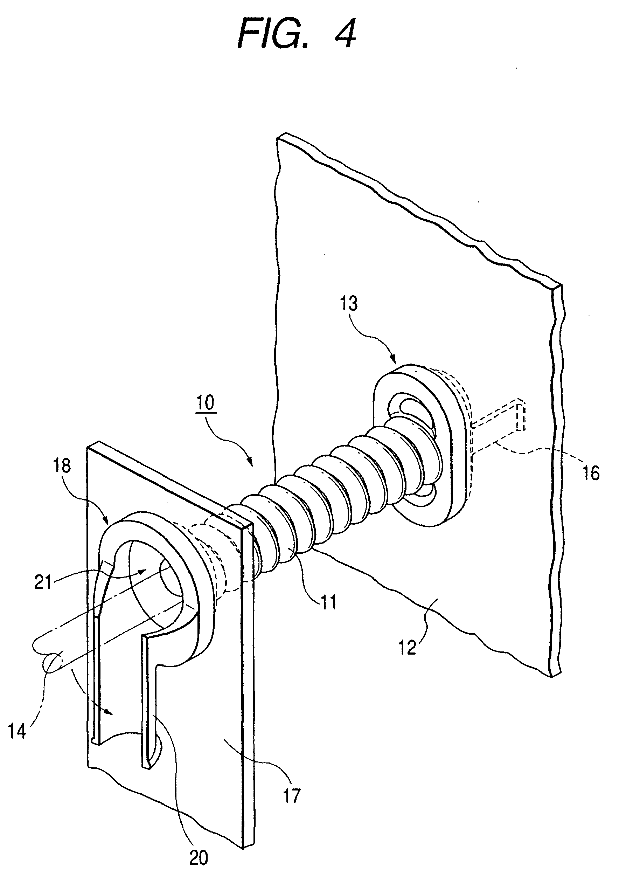

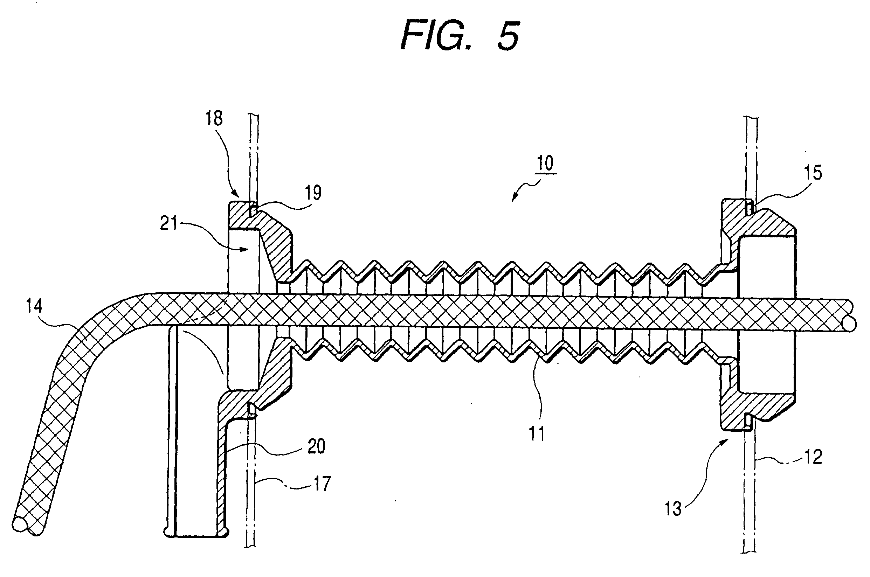

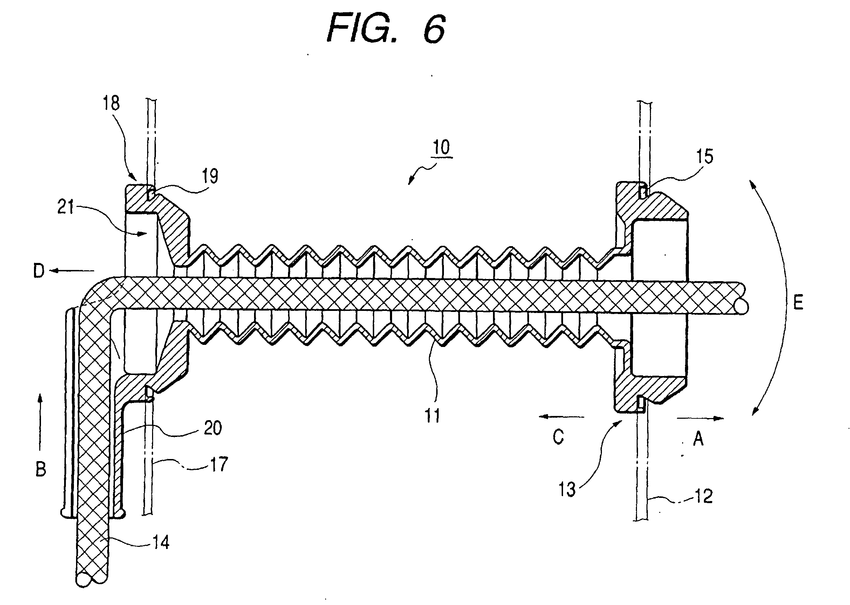

In the fitting of the wire harness 14 in the above-described bellows grommet 10, as shown in Fig. 3, the wire harness 14 is first passed from one fitting portion 13 side and is straightly passed through the opening 21 in the fitting portion 18. Subsequently, as shown in Fig. 4, the slit 22 in the guide tube portion 20 is opened so as to be wide enough to allow the wire harness 14 to pass. Then, the wire harness 14 is bent as shown in Fig. 5, and is accommodated in the guide tube portion 20 as shown in Fig. 6. Subsequently, the slit 22 in the guide tube portion 20 is closed to accommodate the wire harness 14.

Since the arrangement provided is such that the opening 21 is thus formed in the fitting portion 18, when the wire harness 14 is passed through the bellows grommet 10, the wire harness 14 is passed straightly, so that the wire harness 14 can be passed simply without any special exclusive-use jig, thereby making it possible to improve the operating efficiency. In addition, since the arrangement provided is such that the slit 22 is formed in the guide tube portion 20, the wire harness 14 can be accommodated simply in the guide tube portion 20, thereby making it possibile to improve the assembling efficiency. In addition, since the guide tube portion 20 of a tubular shape is provided in the fitting portion 18, the wire harness can be restricted reliably.

Since the arrangement is provided as described above, when the fitting portion 13 moves in the direction indicated by the arrow A shown in Fig. 6, the bellows tube portion 11 is expanded, and the wire harness 14 correspondingly moves in the direction indicated by the arrow B shown in Fig. 6. During this movement, since the opening 21 is formed in the fitting portion 18, the wire harness 14, when pulled out from the guide tube portion 20, does not abut against the bent portion at the inner wall surface of the fitting portion 18, so that the outer peripheral surface of the wire harness 14 is not damaged. Further, since the opening 21 is formed in the fitting portion 18, it is possible to prevent trouble such as the interference of the wire harness 14 with the wall of the bellows grommet 10 due to the twisting, disconnection, and expansion or contraction of the wire harness 14.

When the fitting portion 13 moves in the direction indicated by arrow C shown in Fig. 6, the bellows tube portion 11 is contracted, and the wire harness 14 correspondingly moves in the direction indicated by arrow D shown in Fig. 6. During this movement, the wire harness 14 is pushed in conjunction with the movement of the fitting portion 13, and moves in the pushing-out direction indicated by the arrow D shown in Fig. 6. Namely, the wire harness 14 is pushed out in the direction of abutting against the bent portion at the inner wall surface of the fitting portion 18. In accordance with this embodiment, however, since the opening 21 is formed in the bent portion of the fitting portion 18, even if the wire harness 14 is pushed out toward the bent portion of the fitting portion 18, the wire harness 14 does not abut against the bent portion at the inner wall surface of the fitting portion 18, and moves while being guided by the guide tube portion 20 while projecting slightly from the opening 21 in the fitting portion 18. Hence, the outer peripheral surface of the wire harness 14 is not damaged.

When the fitting portion 13 moves in the direction indicated by arrow E shown in Fig. 6, the bellows tube portion 11 is expanded or contracted, and the wire harness 14 correspondingly moves in a similar manner in the direction indicated by arrow B or in the direction indicated by the arrow D shown in Fig. 6. The wire harness 14 does not abut against the bent portion at the inner wall surface of the fitting portion 18, and the outer peripheral surface of the wire harness 14 is not damaged.

In addition, as for the wire harness 14, there are cases where the wire harness 14 accommodated in the guide tube portion 20 is fixed on the guide tube portion 20 side. In the case where the wire harness 14 accommodated in the guide tube portion 20 is fixed on the guide tube portion 20 side, and the finished wire diameter of the wire harness 14 is small, the wire harness 14 can be easily fixed by superposing the two sides of the slit 22 and winding the tape around the guide tube portion 20. Furthermore, in the case where the wire harness 14 accommodated in the guide tube portion 20 is fixed on the guide tube portion 20 side, and the finished wire diameter of the wire harness 14 is large, the wire harness 14 can be easily fixed by allowing the wire harness to be held by the guide tube portion 20 in a state in which the gap between the two sides of the slit 22 is widened to cause the wire harness to be exposed, and by winding the tape around the guide tube portion 20 and the wire harness 14.

It should be noted that since the arrangement provided is such that the opening 21 is formed in the fitting portion 18, a mold for molding the bellows grommet 10 can be easily fabricated.

As described above, in accordance with the invention, the following advantages can be offered: In accordance with the invention, it is possible to easily accommodate the wire harness without using a special exclusive-use jig, prevent the wire harness from becoming damaged due to rubbing at the bent portion of the guide tube portion even if the bellows-tube portion expands or contracts, improve the assembling efficiency, and restrict the wire harness reliably.

In accordance with the invention, it is possible to easily accommodate the wire harness without using a special exclusive-use jig, and prevent the wire harness from becoming damaged due to rubbing at the bent portion of the guide tube even if the bellows tube portion expands or contracts. Furthermore, since the slit is opened and closed to accommodate the wire harness in the guide tube portion, the assembling efficiency improves, and the wire harness can be reliably restricted by the guide tube portion.

In addition, in the case where the wire harness accommodated in the guide tube portion is fixed on the guide tube portion side, and the finished wire diameter of the wire harness is small, the wire harness can be easily fixed by superposing slit portions and winding the tape around the guide tube portion by making use of the slit formed from the opening to the distal end. Furthermore, in the case where the finished wire diameter of the wire harness is large, the wire harness can be easily fixed by allowing the wire harness to be held by the guide tube portion in a state in which the gap between the two sides of the slit is widened, and by winding the tape around the guide tube portion and the wire harness. Accordingly, if the finished wire diameters of the wire harness are different, it is possible to cope with wire diameters up to a certain extent, thereby expanding the variation.

In accordance with the invention, it is possible to prevent the wire harness from becoming damaged due to rubbing at the bent portion of the guide tube portion even if the bellows tube portion expands or contracts.

## Claims

1. A bellows grommet (10) comprising:
a bellows tube portion (11) which is expandable and contractable;
two fitting portions (13, 18) which are attachable to panels (12, 17) and integrally formed at opposite ends of the bellow tube portion (11); and
a flexible guide tube portion (20), which is bent so as to extend along the panel (17) to which the first fitting portion (18) is attached in use, and which is formed on the first fitting portion (18); **characterised by**
an opening (21) which opens outwardly and is provided in the bent portion of the guide tube portion (20); and
a slit (22) formed in the guide tube portion (20) so as to extend from the opening (21) to a distal end of the guide tube portion (20), so that a wire harness (14) is insertable in the guide tube portion (20) by opening and closing the slit (22),
wherein the guide tube portion (20) is adapted to hold, in use, a wire harness (14) whose diameter is larger than that of the guide tube portion (20) when the gap between the two sides of the slit (22) is widened.

2. The bellows grommet (10) according to claim 1, wherein the opening (21) is formed at a position so as to prevent the wire harness (14) from abutting against the guide tube portion (20) of the first fitting portion (18) when the wire harness (14) is inserted through the bellows tube portion (11).

3. The bellows grommet (10) according to claims 2 or 3, wherein a fixing piece (16) for fixing the wire harness (14) is formed in the second fitting portion (18).

4. The bellows grommet (10) according to one of claims 1 to 3, wherein the guide tube portion (20) is extended in a direction substantially perpendicular to that in which the bellows tube portion (11) is extended.

5. The bellows grommet (10) of any preceding claim arranged so that, in use, tape can be wound around the guide tube portion (20) to hold the wire harness (14).

## Patentansprüche

1. Balgdichtung (10), die umfasst:
einen Balgröhrenabschnitt (11), der ausgedehnt und zusammengezogen werden kann;
zwei Passabschnitte (13, 18), die an Platten (12, 17) angebracht werden können und integral an einander gegenüberliegenden Enden des Balgröhrenabschnitts (11) ausgebildet sind; und
einen flexiblen Leitröhrenabschnitt (20), der in Funktion so gebogen ist, dass er sich an der Platte (17) entlang erstreckt, an der der erste Passabschnitt (10) angebracht ist, und der an dem ersten Passabschnitt (18) ausgebildet ist;
**gekennzeichnet durch** eine Öffnung (21), die sich nach außen öffnet und in dem Leitröhrenabschnitt (20) vorhanden ist; und
einen Schlitz (22), der in dem Leitröhrenabschnitt (20) so ausgebildet ist, dass er sich von der Öffnung (21) zu einem vorderen Ende des Leitröhrenabschnitts (20) erstreckt, so dass ein Kabelbaum (14) in den Leitröhrenabschnitt (20) eingeführt werden kann, indem der Schlitz (22) geöffnet und geschlossen wird;
wobei der Leitröhrenabschnitt (20) so eingerichtet ist, dass er in Funktion einen Drahtkabelbaum (14) aufnimmt, dessen Durchmesser größer ist als der des Leitröhrenabschnitts (20), wenn der Zwischenraum zwischen den zwei Seiten des Schlitzes (22) verbreitert wird.

2. Balgdichtung (10) nach Anspruch 1, wobei die Öffnung (21) an einer Position ausgebildet ist, an der sie verhindert, dass der Drahtkabelbaum (14) an dem Leitröhrenabschnitt (20) des ersten Passabschnitts (18) anschlägt, wenn der Drahtkabelbaum (14) durch den Balgröhrenabschnitt (11) eingeführt wird.

3. Balgdichtung (10) nach den Ansprüchen 2 oder 3, wobei ein Fixierstück (16) zum Fixieren des Drahtkabelbaums (14) in dem zweiten Passabschnitt (18) ausgebildet ist.

4. Balgdichtung (10) nach einem der Ansprüche 1 bis 3, wobei sich der Leitröhrenabschnitt (20) in einer Richtung im Wesentlichen senkrecht zu der erstreckt, in der sich der Balgröhrenabschnitt (11) erstreckt.

5. Balgdichtung (10) nach einem der vorangehenden Ansprüche, die so angeordnet ist, dass in Funktion Band um den Leitröhrenabschnitt (20) gewickelt werden kann, um den Drahtkabelbaum (14) zu halten.

## Revendications

1. Passe-câble à soufflet (10) comportant :
une partie de tube à soufflet (11), qui peut être allongée et contractée;
deux parties de montage (13, 18) qui peuvent être fixées sur des panneaux (12, 17) et formées intégralement aux extrémités opposées de la partie de tube à soufflet (11); et
une partie de tube de guidage flexible (20), qui est coudée de façon à s'étendre le long du panneau (17) sur lequel la première partie de montage (18) est fixée lors de utilisation, et qui est formée sur la première partie de montage (18); **caractérisé par**
une ouverture (21) qui s'ouvre vers l'extérieur et est prévue dans la partie coudée de la partie de tube de guidage (20); et
une fente (22) formée dans la partie de tube de guidage (20) de façon à s'étendre depuis l'ouverture (21) jusqu'à une extrémité distale de la partie de tube de guidage (20), de telle sorte qu'un faisceau de câble (14) peut être inséré dans la partie de tube de guidage (20) en ouvrant et fermant la fente (22);
la partie de tube de guidage (20) étant prévue pour maintenir, pendant l'utilisation, un faisceau de câble (14) dont le diamètre est plus grand que celui de la partie de tube de guidage (20) lorsque l'espace entre les deux côtés de la fente (22) est élargi.

2. Passe-câble à soufflet (10) selon la revendication 1, dans lequel l'ouverture (21) est formée dans une position qui empêche le faisceau de câble (14) de buter contre la partie de tube de guidage (20) de la partie de montage (18) lorsque le faisceau de câble (14) est inséré à travers la partie de tube à soufflet (11).

3. Passe-câble à soufflet (10) selon la revendication 2 ou 3, dans lequel une pièce de fixation (16) pour la fixation du faisceau de câble (14) est formée dans la deuxième partie de montage (18).

4. Passe-câble à soufflet (10) selon l'une des revendications 1 à 3, dans lequel la partie de tube de guidage (20) s'étend dans une direction sensiblement perpendiculaire à celle dans laquelle s'étend la partie de tube à soufflet (11).

5. Passe-câble à soufflet (10) selon l'une quelconque des revendications précédentes, prévu de telle sorte que, lors de l'utilisation, un ruban peut être enroulé autour de la partie de tube de guidage (20) afin de maintenir le faisceau de câble (14).
